# FASCICULE DE BREVET EUROPEEN

(11) **EP 1 137 978 B1**
(45) Date de publication et mention de la délivrance du brevet: **22.05.2002**
(21) Numéro de dépôt: 99957355.3
(22) Date de dépôt: 02.12.1999
(51) Int. Cl.: G06F 3/00, G06F 1/16

(54) **DISPOSITIF INDICATEUR DE MOUVEMENTS POUR LOGICIELS**
GERÄT DAS BEWEGUNGEN FÜR SOFTWARE ANGIBT
DEVICE INDICATING MOVEMENTS FOR SOFTWARE

(30) Priorité: 03.12.1998 FR 9815266
(43) Date de publication de la demande: 04.10.2001
(73) Titulaire: Nicolas, Frédéric, 77250 Moret-sur-Loin (FR); Hermand, Fabien, 75009 Paris (FR); Bonnard, Jean, 75020 Paris (FR)
(72) Inventeur: Nicolas, Frédéric, 77250 Moret-sur-Loin (FR); Hermand, Fabien, 75009 Paris (FR); Bonnard, Jean, 75020 Paris (FR)
(74) Mandataire: Le Forestier, Eric
(86) Numéro de dépôt international: FR9902991
(87) Numéro de publication internationale: WO0033168

(56) Documents cités:
- EP-A- 0 570 999
- WO-A-97/20305
- WO-A-98/36400
- US-A- 4 414 537
- US-A- 5 290 964
- US-A- 5 444 462
- US-A- 5 490 784

## Description

L'invention concerne les moyens de commande de logiciels formant des capteurs de mouvement d'une partie du corps d'un utilisateur.

Parmi ces moyens de commande, on distingue habituellement les éléments qui reproduisent un élément de pilotage ou de guidage (joysticks, volants, pédales) et les éléments fixés sur le corps de l'utilisateur (bras ou mains par exemple), prévus pour capter ses mouvements en les gênant le moins possible.

On a ainsi proposé, dans le document US 5 229 756 un simulateur de combat de boxe dans lequel l'utilisateur est équipé de capteurs de flexion des coudes fixés sur des manchons, qui mesurent un angle de flexion du coude et délivrent un signal analogique représentatif de cet angle, ce signal analogique étant ensuite converti en signal numérique, pour mémorisation et traitement.

Ce type de dispositif présente un inconvénient majeur.

Le signal délivré par le capteur doit être traité par un convertisseur et un calculateur ayant tous deux de fortes capacités de calcul et de mémoire.

En pratique, ce type de dispositif n'est utilisé qu'avec des calculateurs et des logiciels spécialement prévus pour une telle application en raison des fortes exigences inhérents à ces capteurs.

Le but principal de l'invention est de proposer un dispositif qui soit apte à transformer la position ou le placement d'un organe d'un utilisateur en un signal de commande qui soit significativement représentatif de cette position ou de ce déplacement, tout en étant peu demandeur en capacité de calcul et en mémoire.

Un second but de l'invention est de proposer un tel dispositif utilisant des capteurs de mouvement peu encombrants et peu coûteux à réaliser.

Ces buts sont atteints selon l'invention grâce à un dispositif de transformation de mouvements d'au moins une articulation d'un utilisateur en signaux de commande pour calculateur, comprenant un manchon choisie dans le groupe constitué du genou, du coude, de l'épaule, de la hanche ou de la cheville, destiné à être enfilé autour de l'articulation et un capteur de mouvement fixé sur ce manchon, caractérisé en ce que le capteur est un capteur tout ou rien et est directement assujetti à des mouvements de parois du manchon.

Le présent dispositif permet une utilisation de capteurs de mouvements corporels sur des consoles de jeu de type domestique, ou sur des ordinateurs personnels, par exemple avec des jeux vidéo existants.

D'autres buts, caractéristiques et avantages de l'invention apparaitront à la lecture de ta description détaillée qui va suivre, faite en référence aux figures sur lesquelles:
- la figure 1 représente schématiquement un dispositif selon l'invention, sans utilisateur;
- la figure 2 représente le même dispositif, placé sur un utilisateur;
- la figure 3 représente une poignée de jeu;
- la figure 4 représente une telle poignée de jeu couplée à un capteur de mouvement du coude selon l'invention;
- la figure 5 représente un capteur de mouvement à interrupteur, selon une autre variante de l'invention ;
- la figure 6 représente un capteur de mouvement du coude à pression d'air, selon une autre variante de l'invention ;
- la figure 7 représente un dispositif selon l'invention selon une vue de face détaillée ;
- la figure 8 est un schéma représentant le fonctionnement d'un module de traitement central du dispositif de la figure 7 ;
- la figure 9 est un schéma représentant le fonctionnement d'un couple constitué d'un capteur de mouvement et d'une poignée de commande du dispositif des figures 7 et 8 ;
- la figure 10 est un schéma représentant le fonctionnement d'un capteur de mouvement de genou du dispositif des figures 7 et 8 ;

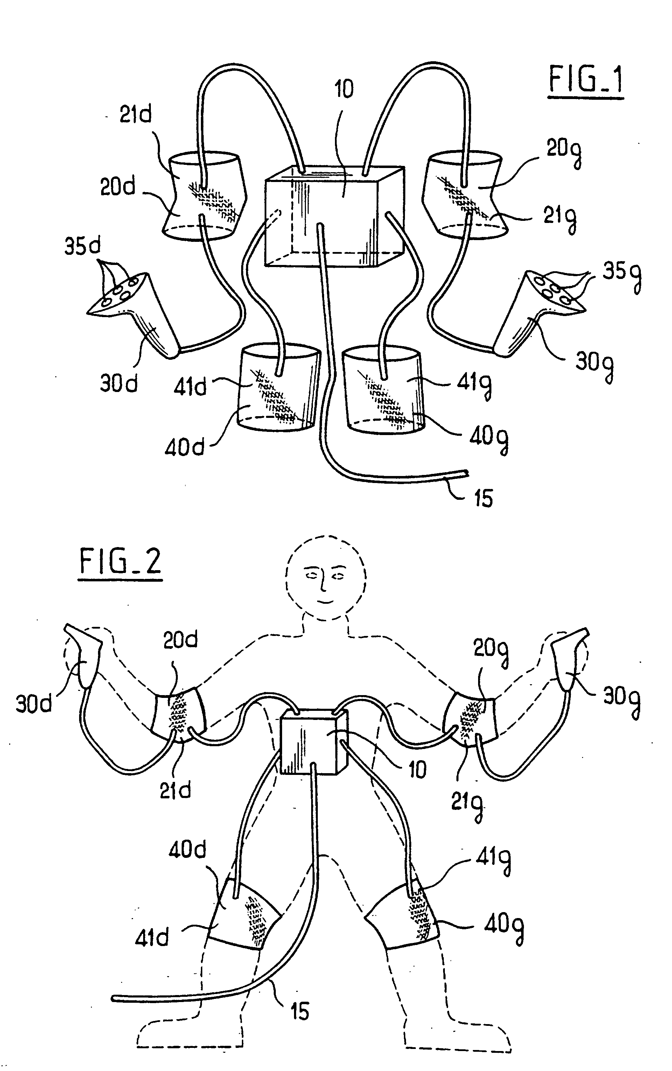

Le dispositif de la figure 1 présente une architecture en étoile, dont le centre est constitué par un module de prétraitement 10, et dont quatre branches, constituées par des liaisons filaires, portent des capteurs de mouvements 20d, 20g, 40d, et 40g.

Ces capteurs de mouvement sont ici des capteurs de flexion de genoux 40g, 40d et de coudes 20g, 20d.

Deux branches portant chacune un capteur de flexion de coude 20d et 20g se prolongent chacune au delà du capteur, jusqu'à une poignée de contrôle 30d, 30g munie d'une série de boutons-poussoirs 35g, 35d.

Comme on peut le voir sur la figure 2, lorsque l'utilisateur porte le module 10 sur l'abdomen, les liaisons filaires parcourent ses bras et ses cuisses jusqu'aux capteurs, les liaisons entre les capteurs de coudes 20g, 20d et les poignées 30g, 30d s'étendant sensiblement le long des avant-bras, pour une gêne minimale des gestes de l'utilisateur.

Lorsque les capteurs de flexion 20g, 20d, 40g, 40d, ou les boutons-poussoirs 35g, 35d sont sollicités, des signaux correspondants circulent de ces éléments jusqu'au module 10. Le module 10 traite alors ces signaux, puis envoie les signaux traités sur une liaison de sortie 15 vers un calculateur non représenté, au format souhaité pour ce calculateur.

Chaque capteur de flexion est ici monté sur un manchon souple 21d, 21g, 41d, 41g enfilé autour de l'articulation considérée. Le manchon est simplement constitué d'une bande de tissus.

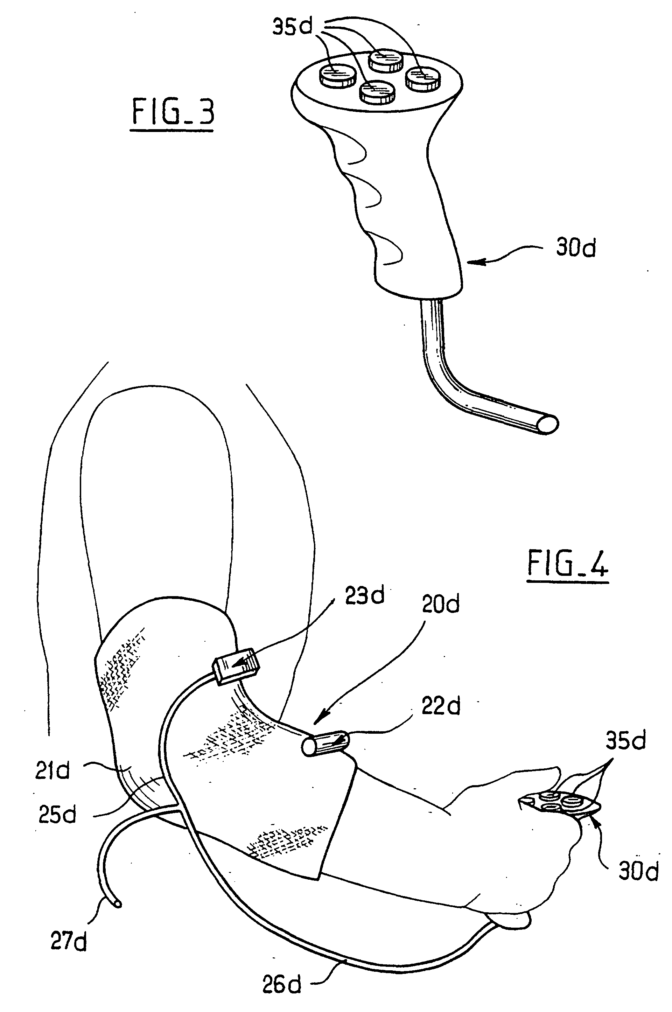

Sur la figure 4, on voit que le manchon 21d s'étend de part et d'autre du coude, autour du bras et de l'avant-bras (autour de la cuisse et du mollet dans le cas du genou) .

Le manchon présente des parties internes à l'articulation. Il présente notamment, de part et d'autre du coude, deux surfaces internes qui se rapprochent ou s'éloignent l'une de l'autre selon que l'utilisateur plie ou étend son bras.

On tire profit de cette propriété en plaçant un capteur de mouvement sur au moins une de ces deux surfaces.

A la figure 4, on dispose sur ces deux surfaces deux pièces constitutives d'un capteur magnétique à effet Hall, à savoir un petit aimant 22 sur la face interne de l'avant-bras et une pièce réceptrice 23 pour cet aimant sur la face interne du biceps.

La pièce réceptrice 23 inclut trois fils définissant deux circuits électriques, dont un premier circuit est ouvert ou fermé selon que l'aimant 22 est respectivement proche ou éloigné de la pièce 23, et dont le second circuit est, au contraire, fermé ou ouvert selon que l'aimant 22 est proche ou éloigné.

Dans le présent mode de réalisation, une liaison 25d à deux fils relie les bornes d'un des deux circuits au module 10.

Selon que le coude est fléchi ou non, un signal électrique circule ou non dans le circuit et dans la liaison 25d.

Selon une variante, la liaison 25d inclut deux fils supplémentaires reliés à l'autre circuit pour obtenir en plus une information inverse.

Le présent capteur magnétique de mouvement délivre donc un signal positif ou nul selon la position fléchie ou étendue de l'articulation.

C'est donc la position à un instant donné qui détermine la teneur du signal, indépendamment du fait que l'articulation soit fixe ou mobile à cet instant.

Selon une variante, on adopte un capteur de mouvement qui délivre un signal en tout ou rien en fonction du sens de déplacement de l'articulation et non de sa position effective.

Lorsque l'articulation est en cours de flexion, le capteur adopte un premier état, et lorsque l'articulation est en cours d'extension, le capteur adopte un second état, indépendamment du degré d'extension.

Par une information en tout ou rien fournie par un capteur de mouvement, on peut détecter le déplacement fléchissant ou le déplacement d'extension (par exemple coup de poing ou de pied dans un jeu de combat ) ou encore la position étendue ou fléchie (correspondant par exemple à l'attitude d'un personnage virtuel, les pressions sur les boutons poussoirs 35d et 35g déclenchant des déplacements ou des sauts du personnage).

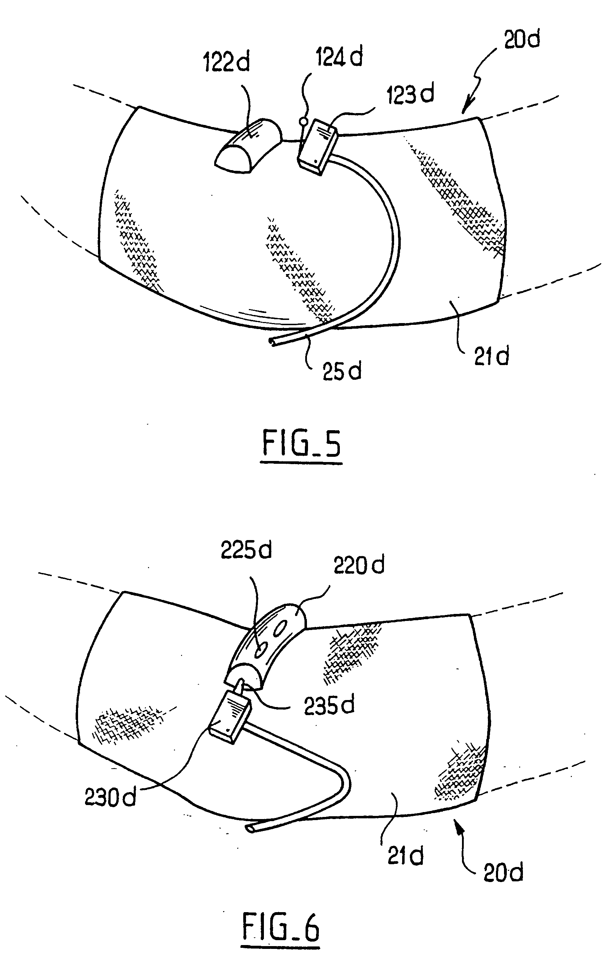

Selon une variante de capteur de mouvement représentée à la figure 5, on dispose, sur les surfaces internes de l'articulation, d'un côté un interrupteur 123 à commande mécanique, ici à levier et de l'autre côté une pièce en mousse 122 en saillie sur l'avant-bras, l'interrupteur 123 étant actionné par mise en butée contre cette pièce 122.

La commande mécanique de l'interrupteur est ici un levier (microrupteur à levier) mais sera également par exemple un galet ou une fourche.

Selon une variante de capteur représentée à la figure 6, on place, dans le creux du coude, une poche à air 220d, qui est le siège d'une surpression lorsqu'elle est pressée.

Un interrupteur 230 est fixé sur le manchon 21d à proximité de la poche 220d, et muni d'un doigt de commande 235 débouchant dans la poche 220d et entraîné dans celle-ci à la manière d'un piston sous l'effet de la surpression.

La poche 220d présente avantageusement ttes ouvertures 225 permettant à l'air d'être chassé de la poche, pour éviter une gêne du mouvement de flexion, les ouvertures étant suffisamment étroites pour maintenir une surpression suffisante au cours de l'expulsion de l'air.

Ce capteur détecte donc une sur-pression brutale, c'est à dire une phase de flexion.

L'interrupteur 230 peut être remplacé par un capteur de pression d'air classique et la poche peut également être réalisée hermétique ou gonflée.

D'autres capteurs en tout ou rien peuvent être utilisés pour tirer profit des déplacements de l'articulation, que ce soit par exemple des capteurs à pression, à déplacement longitudinal ou à déplacement radial. Les capteurs de mouvement peuvent être passifs, c'est à dire avoir besoin d'une alimentation extérieure pour indiquer la position ouverte ou fermée de l'articulation, (ou la présence d'un déplacement dans un sens donné de l'articulation), ou peuvent être actifs, c'est à dire nécessiter une alimentation propre.

Les bouton-poussoirs 35d, 35g des poignées 30g et 30d sont quant à eux situés aux sommets des poignées de façon à être utilisables par les pouces comme pour les poignées de commande habituelles des consoles de jeu.

On adopte ici une disposition des liaisons filaires qui, comme représenté à la figure 4, rassemble les fils 26d venant de la poignée 30d et du capteur de coude 20d, ce rassemblement se trouvant au niveau de l'avant-bras et redirigeant l'ensemble vers le module 10 en une liaison 27d.

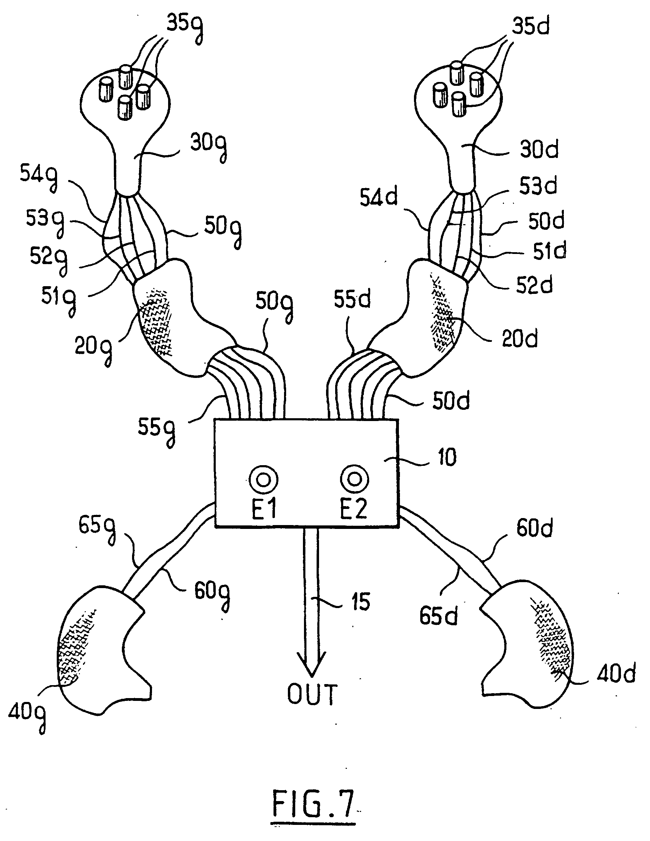

On a représenté, sur les figures 7, 8 et 9, une disposition préférentielle des différentes liaisons électriques entre le module 10 et les différents capteurs et poignées dans le cas présent ci-avant où les capteurs 20g, 20d, 40g, 40d forme chacun un interrupteur 28g, 28d, 48g, 48d.

Par ailleurs, chaque poignée 30g et 30d comporte ici quatre boutons-poussoirs correspondant chacun à un interrupteur 31g, 32g, 33g, 34g.

Une liaison 50g relie en série le module 10, le capteur de coude 20g, et la poignée 30g (60g dans le cas du genou). Par cette liaison, le module 10 fournit un potentiel non nul au capteur 20g et à la poignée 30g. Ce potentiel est foumi sur une des bornes de l'interrupteur de coude 20g et une des bornes de chaque interrupteur de la poignée 30g.

Chaque borne opposée de chacun de ces cinq interrupteurs est reliée par une liaison spécifique 51g, 52g, 53g, 54g et 55g au module 10, sur laquelle ce dernier détecte le retour ou non du potentiel.

Pour un agencement idéal, les quatre liaisons de retour de la poignée 30g et la liaison d'alimentation 50g de celle-ci sont regroupés au sein d'une même gaine isolante 26g qui part de la poignée 30g, et s'étend au niveau du capteur 20g en deux branches, dont l'une rejoint le capteur 20, incluant une ligne d'aller et une ligne de retour de la liaison 50g, et l'autre rassemble l'ensemble des liaisons d'alimentation et de retour, à la fois de la poignée 30g et du capteur 20g.

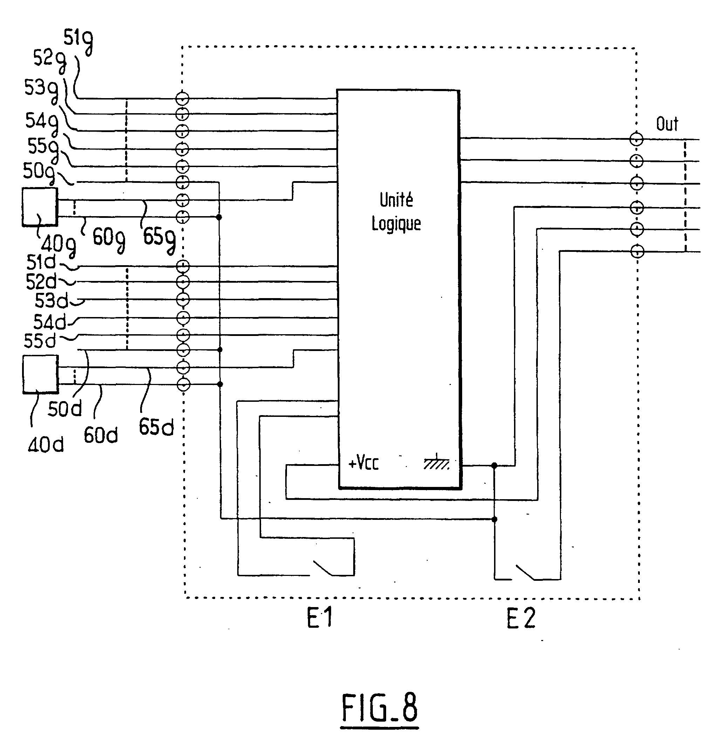

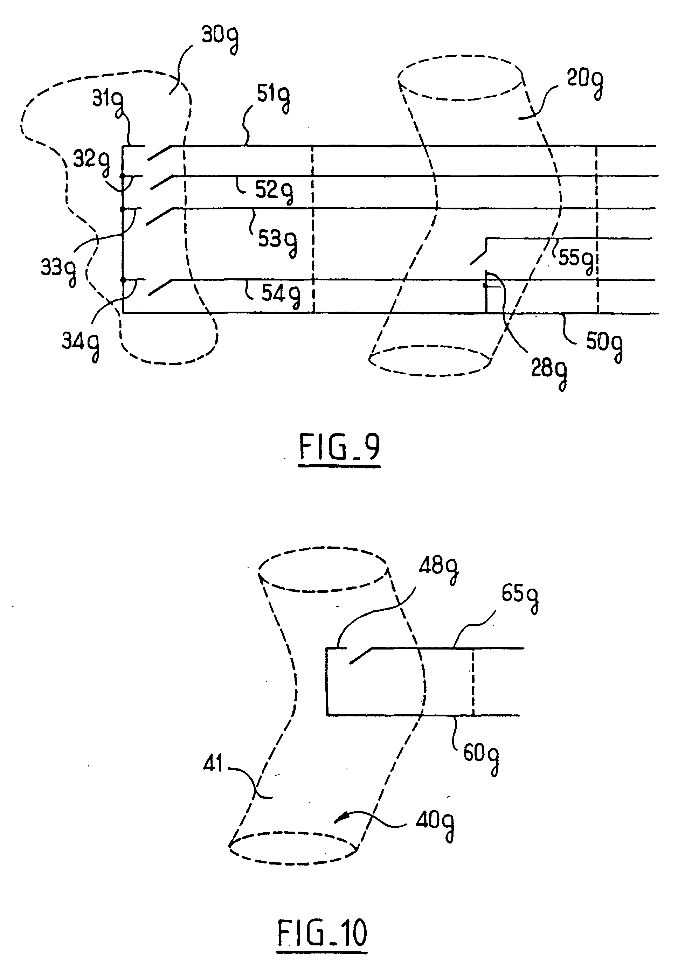

Comme représenté sur les figures 8 et 9, le module 10 comporte deux boutons E1 et E2 servant pour démarrer le jeu vidéo, pour se déplacer dans un menu du jeu et pour une reprise à zéro du logiciel.

Le module 10 exploite les informations en tout ou rien en provenance des différents capteurs et boutons-poussoirs, et les calibre selon le format nécessité par le calculateur, placé à l'autre extrémité de la liaison 15.

Le module 10 inclue lui-même un calculateur pour effectuer un prétraitement numérique des signaux provenant des capteurs, et les transformer en des données exploitables pour le calculateur externe.

Dans le cas présent, le calculateur externe est une console de jeu, et les données de sortie du module 10 sont envoyées sur des entrées de la console normalement connectées à des manettes de jeu (« joystick »), c'est à dire sur un ensemble de contacts eux-mêmes prévus pour recevoir des signaux en tout ou rien.

Pour cela, un tel dispositif fournit un signal de même format que les signaux obtenus avec des manettes de jeu ou commandes à boutons-poussoirs traditionnels.

Le traitement effectué ici par le module 10 est particulièrement simple, il consiste simplement à transformer un signal nul ou non nul en des niveaux logiques numériques de forme prédéterminée semblable à celle des niveaux logiques obtenus en sortie des manettes de jeu classiques.

Selon une variante, le module 10 inclue un calculateur programmé pour transformer les signaux en tout ou rien fournis par les capteurs en des informations codées spécifiquement pour un calculateur externe donné, et pour effectuer différents types de tels traitements pouvant être choisis en fonction du calculateur externe auquel le dispositif est connecté.

Dans le présent mode de réalisation préférentiel, l'unité de calcul non représentée génère des signaux vers le module 10 qui, après traitement adéquat, les envoie sur des organes restituteurs mécaniques, par exemple des organes pneumatiques appliqués sur le corps, de sorte que les signaux de commande envoyés sur le module 10 sont transformés en signaux physiques appliqués au corps de l'utilisateur (retour de sensations de type « bio feed-back »).

Ainsi, dans le présent cas, le boîtier 10 et les poignées 30g et 30d sont munis de masselottes entraînées en rotation par des moteurs électriques pour signaler, par des vibrations, des explosions ou le tir avec certaines armes. D'autres types de restituteurs (casque de réalité virtuelle, écouteurs, bustiers à retour d'effets, chaises ou boîtiers vibrants, etc.) peuvent également être adoptés.

Bien entendu, de multiples variantes seront prévus par l'homme du métier dans le cadre de la présente invention.

Par exemple, les liaisons entre les capteurs 20g, 20d, 40g, 40d et le module 10 peuvent être des liaisons sans fil.

Le boîtier 10 peut être placé en un autre endroit sur l'utilisateur, par exemple sur la hanche, ou encore être placé à côté de l'utilisateur. De même, la liaison entre le système selon l'invention et l'unité de calcul externe peut se faire au moyen d'une liaison sans fil.

Les capteurs de mouvement peuvent être placés sur d'autres articulations que les coudes ou les genoux, par exemple sur l'épaule pour capter la position de l'ensemble du bras ou sur la hanche pour capter la position de l'ensemble de la jambe.

Selon une variante, le système selon l'invention comporte des capteurs supplémentaires permettant de capter les mouvements des pieds de l'utilisateur par exemple, sur l'articulation de la cheville pour capter l'action d'étirer le coup de pied. Dans le cas des jeux vidéos de combat, l'action d'étirer son coup de pied pourra être, par exemple, traduit par un saut d'un personnage virtuel.

Avantageusement, le système selon l'invention comporte des capteurs supplémentaires sous la forme d'un tapis de sol à mousse incluant des contacts, permettant de capter les déplacements des pieds de l'utilisateur (par exemple, l'action d'avancer son pied), et de les traduire en mouvements virtuels. Dans le cas des jeux vidéos de combat, l'action de placer son pied en avant du corps pourra être, par exemple, traduit par le déplacement en avant d'un personnage virtuel.

L'unité de traitement numérique peut être autre qu'un ordinateur ou une console, par exemple une machine de jeux vidéos monobloc telle qu'on en voit dans les galeries de jeux vidéos, une borne interactive, etc., l'utilisateur emportant avec lui le système selon l'invention et le branchant directement sur l'unité de traitement numérique.

Le présent dispositif selon l'invention peut alors être utilisé indifféremment au domicile de l'utilisateur, dans une galerie de jeux vidéos, dans un bar, un aéroport, un casino ou tout autre lieu, puisque le système selon l'invention est aisément transportable, et qu'il nécessite juste une unité de traitement numérique capable de recevoir et d'utiliser les signaux émis par le système selon l'invention, signaux qui sont du même type que les signaux émis par les manettes de jeux ou les manettes de contrôle habituelles d'une telle unité de traitement numérique.

Les types de logiciel pour lesquels le présent système selon l'invention est qualifié comprend un large éventail de possibilités et, en fonction de son besoin du moment, l'utilisateur du système choisit parmi cet éventail de possibilités celle qui répond spécifiquement à sa demande.

Ainsi le système selon l'invention peut servir, sans que cette liste soit exhaustive, à des logiciels de jeux de combat, des logiciels de simulation de sports en général (basket, football, golf, ski, etc.), des logiciels d'apprentissage de mouvements (gymnastique, natation, aérobic, boxe, course à pied, mais aussi cours musicale de batterie, etc.), des logiciels de visioconférence et plus généralement de télé-présence, y compris sur le réseau Internet (animation d'avatar), etc...

Le système selon l'invention comporte avantageusement des adaptateurs permettant d'adapter les différents moyens de connexion entre le module 10 et l'unité de traitement pour le raccordement à différents micro-ordinateurs, consoles ou machines de jeux vidéos monoblocs du type de celles installées dans des salles de jeux.

Les moyens d'entrée/sortie reliant le module 10 à l'unité de traitement externe sont adaptés en fonction du type d'unité de traitement numérique sur lequel est traité le logiciel, les types de branchements pouvant par exemple être du type « joystick », du type commande à boutons (« pad ») ou autres.

Le module 10 comporte en outre des moyens permettant de régler sa sensibilité aux signaux envoyés par les capteurs de mouvement, et d'attribuer des fonctionnalités à tel ou tel capteur.

Un tel dispositif peut être utilisé avec des logiciels existants, car les signaux de sortie du dispositif sont selon un mode de réalisation préférentiel, identiques aux signaux sortant des manettes de jeux communément utilisés, et les signaux entrants dans le système selon l'invention pourront être traités de façon analogue à la façon dont ils sont traités actuellement sur certaines manettes de jeux et simulateurs de sensations.

On remarquera que dans l'exemple donné, toutes les fonctionnalités standard des manettes de jeux les plus courantes se retrouvent dans le système selon l'invention.

Il peut toutefois être utilisé avec des logiciels qui pourront être créés en conservant l'assurance d'une utilisation étendue (du fait de la compatibilité avec les manettes de jeux existantes) tout en s'assurant d'un nouveau mode d'utilisation par le dispositif selon l'invention, ou encore avec des logiciels créés spécialement pour le système selon l'invention (par exemple, des logiciels de gymnastique à la maison, où les mouvements de l'utilisateur sont capturés, quantifiés et appréciés par le logiciel, ou bien des logiciels de rencontres virtuelles d'utilisateurs).

Un tel système est peu encombrant, et aisément transportable.

## Revendications

1. Dispositif de transformation de mouvements d'au moins une articulation d'un utilisateur choisie dans le groupe constitué du genou, du coude, de l'épaule, de la hanche ou de la cheville, en signaux de commande pour calculateur, comprenant un manchon (21d, 21g, 41d, 41g) destiné à être enfilé autour de l'articulation et un capteur de mouvement (20d, 20g, 40d, 40g) fixé sur ce manchon, **caractérisé en ce que** le capteur (20d, 20g, 40d, 40g) est un capteur tout ou rien et est directement assujetti à des mouvements de parois du manchon (21d, 219, 41d, 41g).

2. Dispositif selon la revendication 1, **caractérisé en ce que** le capteur (20d, 20g, 40d, 40g) est prévu pour être placé et maintenu dans le creux de l'articulation.

3. Dispositif selon la revendication 1 ou 2, **caractérisé en ce que** le capteur inclut un détecteur magnétique (23d) destiné à être placé d'un côté de l'articulation, et une pièce détectable (22d) par le détecteur (23d), placée de l'autre côté de l'articulation.

4. Dispositif selon la revendication 1 ou 2, **caractérisé en ce que** le capteur inclut une poche à air (220d) et un capteur réagissant à une surpression (23d) apparaissant dans cette poche à air (210d).

5. Dispositif selon la revendication 1 ou 2, **caractérisé en ce que** le capteur (20d, 20g, 40d, 40g) inclut un interrupteur (123d) à commande mécanique destiné à être placé sur un premier côté de l'articulation, et une pièce (122d) en saillie destinée à être placée d'un côté opposé de l'articulation, prévue pour former une butée pour ladite commande mécanique (122d).

6. Dispositif selon l'une quelconque des revendications précédentes, **caractérisé en ce que** le capteur (20d, 20g, 40d, 40g) est destiné à être placé sur une épaule de l'utilisateur.

7. Dispositif selon l'une quelconque des revendications précédentes, **caractérisé en ce que** le capteur (20d, 20g, 40d, 40g) est destiné à être placé sur une hanche de l'utilisateur.

8. Dispositif selon l'une quelconque des revendications précédentes, **caractérisé en ce que** le capteur (20d, 20g, 40d, 40g) est destiné à être placé sur l'articulation de la cheville.

9. Dispositif selon l'une quelconque des revendications précédentes, **caractérisé en ce qu'**il comprend des organes mécaniques (10, 30d, 30g) destinés à appliquer, sous la commande d'un calculateur, des actions mécaniques sur une partie du corps de l'utilisateur.

10. Dispositif selon l'une quelconque des revendications précédentes, **caractérisé en ce qu'**il inclut un module de traitement (10) apte à transformer des signaux de sortie du capteur (20d, 20g, 40d, 40g) en des signaux utilisables pour le calculateur.

## Patentansprüche

1. Vorrichtung zum Umwandeln von Bewegungen wenigstens eines Gelenks eines Benutzers, ausgewählt aus der durch das Knie, den Ellbogen, die Schulter, die Hüfte oder den Knöchel gebildeten Gruppe, in Steuersignale für einen Rechner, umfassend eine Hülse (21d, 21g, 41d, 41g), welche dazu bestimmt ist, um das Gelenk gelegt zu werden, und einen Bewegungsaufnehmer (20d, 20g, 40d, 40g), der auf dieser Hülse befestigt ist, **dadurch gekennzeichnet, daß** der Aufnehmer (20d, 20g, 40d, 40g) ein Alles- oder -Nichts-Aufnehmer ist und direkt den Bewegungen der Wandung der Hülse (21d, 21g, 41d, 41g) unterworfen ist.

2. Vorrichtung nach Anspruch 1, **dadurch gekennzeichnet, daß** der Aufnehmer (20d, 20g, 40d, 40g) dafür vorgesehen ist, in der Kehle des Gelenks plaziert und gehalten zu werden.

3. Vorrichtung nach Anspruch 1 oder 2, **dadurch gekennzeichnet, daß** der Aufnehmer folgendes umfaßt: einen magnetischen Detektor (23d), der dazu bestimmt ist, an einer Seite des Gelenks plaziert zu werden, und ein durch den Detektor (23d) detektierbares Stück (22d), welches an der anderen Seite des Gelenks plaziert ist.

4. Vorrichtung nach Anspruch 1 oder 2, **dadurch gekennzeichnet, daß** der Aufnehmer folgendes umfaßt: eine Lufttasche (220d) und einen Aufnehmer, der auf einen, in dieser Lufttasche (210d) auftretenden Überdruck (23d) anspricht.

5. Vorrichtung nach Anspruch 1 oder 2, **dadurch gekennzeichnet, daß** der Aufnehmer (20d, 20g, 40d, 40g) folgendes umfaßt: einen mechanisch betätigbaren Schalter (123d), der dazu bestimmt ist, auf einer ersten Seite des Gelenks plaziert zu werden, und ein vorstehendes Stück (122d), das dazu bestimmt ist, auf einer gegenüberliegenden Seite des Gelenks plaziert zu werden, und das dazu vorgesehen ist, einen Anschlag für die mechanische Betätigung (122d) zu bilden.

6. Vorrichtung nach einem der vorhergehenden Ansprüche, **dadurch gekennzeichnet, daß** der Aufnehmer (20d, 20g, 40d, 40g) dazu bestimmt ist, auf einer Schulter des Benutzers plaziert zu werden.

7. Vorrichtung nach einem der vorhergehenden Ansprüche, **dadurch gekennzeichnet, daß** der Aufnehmer (20d, 20g, 40d, 40g) dazu bestimmt ist, auf einer Hüfte des Benutzers plaziert zu werden.

8. Vorrichtung nach einem der vorhergehenden Ansprüche, **dadurch gekennzeichnet, daß** der Aufnehmer (20d, 20g, 40d, 40g) dazu bestimmt ist, auf dem Kniegelenk plaziert zu werden.

9. Vorrichtung nach einem der vorhergehenden Ansprüche, **dadurch gekennzeichnet, daß** sie mechanische Organe (10, 30d, 30g) aufweist, die dazu bestimmt sind, unter der Steuerung eines Rechners mechanische Wirkungen auf eine Partie des Körpers des Benutzers auszuüben.

10. Vorrichtung nach einem der vorhergehenden Ansprüche, **dadurch gekennzeichnet, daß** sie ein Verarbeitungsmodul (10) aufweist, das dazu eingerichtet ist, Ausgangssignale des Aufnehmers (20d, 20g, 40d, 40g) in für den Rechner verwendbare Signale umzuwandeln.

## Claims

1. Device for transforming movements of at least one joint of a user selected from the group constituted by the knee, the elbow, the shoulder, the hip, or the ankle, into control signals for a computer, comprising a sleeve (21d, 21g, 41d, 41g) for fitting around the joint and a movement sensor (20d, 20g, 40d, 40g) fixed to this sleeve, **characterized in that** the sensor (20d, 20g, 40d, 40g) is an on/off sensor and is directly subject to the movements of the walls of the sleeve (21d, 21g, 41d, 41g).

2. Device according to Claim 1, **characterized in that** the sensor (20d, 20g, 40d, 40g) is designed to be placed and held in the hollow of the joint.

3. Device according to Claim 1 or 2, **characterized in that** the sensor includes a magnetic detector (23d) for placing on one side of the joint and a piece (22d) that is detectable by the detector (23d) and placed on the other side of the joint.

4. Device according to Claim 1 or 2, **characterized in that** the sensor includes an air bag (220d) and a sensor (23d) responsive to a pressure increase that appears in said air bag (210d).

5. Device according to Claim 1 or 2, **characterized in that** the sensor (20d, 20g, 40d, 40g) includes a switch (123d) with mechanical control for placing on a first side of the joint, and a projecting piece (122d) for placing on the opposite side of the joint and designed to constitute an abutment for said mechanical control (123d).

6. Device according to any preceding claim, **characterized in that** the sensor (20d, 20g, 40d, 40g) is designed to be placed on a shoulder of the user.

7. Device according to any preceding claim, **characterized in that** the sensor (20d, 20g, 40d, 40g) is designed to be placed on a hip of the user.

8. Device according to any preceding claim, **characterized in that** the sensor (20d, 20g, 40d, 40g) is designed to be placed on an ankle joint.

9. Device according to any preceding claim, **characterized in that** it comprises mechanical members (10, 30d, 30g) for applying mechanical actions on a part of the user's body under the control of a computer.

10. Device according to any preceding claim, **characterized in that** it includes a processing module (10) suitable for transforming output signals from the sensor (20d, 20g, 40d, 40g) into signals usable by the computer.
